(19)

Europäisches Patentamt

European Patent Office

Office européen des brevets

(11) **EP 3 118 267 A1**

(12) **EUROPEAN PATENT APPLICATION**

(43) Date of publication:
**18.01.2017 Bulletin 2017/03**

(21) Application number: **16177492.2**

(22) Date of filing: **01.07.2016**

(51) Int Cl.:
***C09D 11/00*** *(2014.01)*      ***C09D 11/30*** *(2014.01)*
***C09D 11/32*** *(2014.01)*      ***C09D 11/322*** *(2014.01)*
***C09D 11/326*** *(2014.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **14.07.2015   JP 2015140670**

(71) Applicant: **Riso Kagaku Corporation
Tokyo, 108-8385 (JP)**

(72) Inventors:
• **Shimizu, Manami
   Ibaraki, 305-0818 (JP)**
• **Watanabe, Yoshifumi
   Ibaraki, 305-0818 (JP)**

(74) Representative: **Hoffmann Eitle
Patent- und Rechtsanwälte PartmbB
Arabellastraße 30
81925 München (DE)**

(54) **INKJET INK**

(57)      An inkjet ink is provided which preferably having a small particle size and excellent intermittent discharge-ability. Moreover, the inkjet ink is provided which preferably improving the storage stability of the inkjet ink, and printing a printed item having excellent rub fastness. Spe-cifically, an inkjet ink comprising colored resin particles, a basic dispersant and a non-aqueous solvent, wherein the colored resin particles comprise a pigment, a solid resin and a pigmentary synergist is provided.

EP 3 118 267 A1

**Description**

BACKGROUND OF THE INVENTION

FIELD OF THE INVENTION

The present invention relates to an inkjet ink.

DESCRIPTION OF THE RELATED ART

The colorants for inkjet inks can be broadly classified into dyes and pigments. Using a dye offers the advantage of particularly favorable color development. Further, compared with pigments, dyes offer the advantage of superior abrasion resistance, and particularly superior rub fastness. However, dyes themselves exhibit inferior water resistance and marker resistance. On the other hand, pigments offer the advantages of high image density and excellent weather resistance, but exhibit inferior abrasion resistance, and particularly rub fastness, compared with dyes.

In light of these properties, a method has been proposed in which by encapsulating the colorant within a resin to form colored resin particles, an ink can be provided which exhibits excellent abrasion resistance, water resistance and marker resistance, while retaining the image-forming properties of the colorant. It is desirable that the resin has properties which are able to impart the ink with abrasion resistance, water resistance and marker resistance.

Patent Document 1 and Patent Document 2 each proposes the production of a polymer particle dispersion in which by using an organic solvent A and an organic solvent B having almost no compatibility with the organic solvent A, forming a dispersion composed of a dispersed phase containing the organic solvent B and a resin and a continuous phase containing the organic solvent A, and then removing the organic solvent B from the dispersion under reduced pressure or heating, a polymer particle dispersion is produced containing polymer particles dispersed in the organic solvent A.

However, the above documents did not investigate the abrasion resistance, water resistance or marker resistance of images obtained by preparing a printing ink using this type of polymer particle dispersion and then printing the ink onto paper or the like. It is difficult to obtain satisfactory image abrasion resistance simply by adding a resin to the ink. Further, another problem arises in that if the colorant is added in an amount sufficient to obtain satisfactory coloration vividness for the printed image, then the viscosity of the polymer particle dispersion increases, making preparation of the dispersion difficult.

Patent Document 3 proposes colored resin particles prepared by dispersing a dispersion phase containing a non-aqueous solvent B, a dye, a resin and an acidic dispersant in a continuous phase containing a non-aqueous solvent A and a basic dispersant to prepare an oil-in-oil emulsion, and then removing the non-aqueous solvent B from this oil-in-oil emulsion.

Patent Document 3 discloses that by using a basic dispersant in the continuous phase and an acidic dispersant in the dispersion phase, the oil-in-oil emulsion can be prepared with excellent emulsion stability regardless of the type of resin used, and a colored resin particle dispersion can be prepared which exhibits excellent water resistance, marker resistance and rub fastness.

Patent Document 1: JP 2007-197632 A
Patent Document 2: JP 2005-255911 A
Patent Document 3: JP 2014-019770 A

With inkjet inks, if the solvent in the ink volatilizes while the ink is loaded in the inkjet head, then the nozzles of the inkjet head may sometimes become blocked, causing discharge faults. Nozzle blockages are more likely to occur when the ink is loaded into the inkjet head and then left to sit for an extended period of time, causing a deterioration in the so-called "intermittent dischargeability".

If a solvent having a comparatively low boiling point is used in preparing an inkjet ink, then the ink solvent is more prone to volatilization, increasing the likelihood of intermittent dischargeability problems.

In Patent Document 3, because a dye is used in the dispersion, the colored resin particles are able to be micronized. However, if a pigment is used in the dispersion, then a problem arises in that the particle size of the colored resin particles tends to increase, which can cause discharge faults.

Further, in order to improve the intermittent dischargeability, it is desirable to prepare the dispersion using a high-boiling point solvent. However, if a high-boiling point solvent is used, then a problem arises in that the colored resin particles cannot be adequately micronized, and as a result, the intermittent dischargeability cannot be satisfactorily improved.

An object of the present invention is to provide an inkjet ink having a small particle size and excellent intermittent dischargeability. Moreover, the invention also has an object of improving the storage stability of the inkjet ink, and obtaining a printed item having excellent rub fastness.

## SUMMARY OF THE INVENTION

The present invention includes the following aspects.

(1) An inkjet ink comprising colored resin particles, a basic dispersant and a non-aqueous solvent, characterized in that the colored resin particles comprise a pigment, a solid resin and a pigmentary synergist.

(2) The inkjet ink according to (1), characterized in that the colored resin particles also comprise a liquid organic compound having an acidic group.

(3) The inkjet ink according to (2), characterized in that the acidic group of the liquid organic compound having an acidic group includes a phosphoric acid group.

(4) The inkjet ink according to any one of (1) to (3), characterized in that the solid resin comprises one or more resins selected from among nitrogen-containing resins and aromatic ring-containing resins.

(5) The inkjet ink according to (4), characterized in that the solid resin comprises nitrocelluloses.

(6) The inkjet ink according to (4), characterized in that the solid resin comprises polyamide resins having an alkoxy group.

(7) The inkjet ink according to (4), characterized in that the solid resin comprises styrene-(meth)acrylic-based resins.

(8) The inkjet ink according to any one of (1) to (7), characterized in that the non-aqueous solvent has an initial boiling point of 250°C or higher.

(9) The inkjet ink according to any one of (1) to (8), wherein an amount of the pigmentary synergist relative to a total mass of the colored resin particles is within a range from 0.25 mass% to 10 mass%.

(10) The inkjet ink according to any one of (1) to (9), wherein an amount of the pigmentary synergist, expressed as a mass ratio relative to a value of 1 for the pigment, is within a range from 0.005 to 0.2.

(11) The inkjet ink according to any one of (1) to (10), wherein an amount of the solid resin relative to a total mass of the colored resin particles is within a range from 10 mass% to 70 mass%.

(12) The inkjet ink according to Claim (2) or (3), wherein an amount of the liquid organic compound having an acidic group to a total mass of the colored resin particles is within a range from 0.1 mass% to 50 mass%.

(13) The inkjet ink according to Claim (2) or (3), wherein a mass ratio between the liquid organic compound having an acidic group and the pigment satisfies (mass of the liquid organic compound having an acidic group) / (mass of the pigment) $\geq$ 0.5.

The present invention is able to provide an inkjet ink having a small particle size and excellent intermittent dischargeability. Moreover, the invention can also improve the storage stability of the inkjet ink, and yields a printed item having excellent rub fastness.

## DETAILED DESCRIPTION OF THE EMBODIMENTS

An inkjet ink according to one embodiment of the present invention (hereafter sometimes referred to as simply "the ink") comprises colored resin particles, a basic dispersant and a non-aqueous solvent, wherein the colored resin particles comprise a pigment, a solid resin and a pigmentary synergist.

This embodiment is able to provide an inkjet ink having a small particle size and excellent intermittent dischargeability. Further, the storage stability of the inkjet ink can be improved, and a printed item having excellent rub fastness can be obtained.

In this embodiment, because the pigment in the colored resin particles is encapsulated in the solid resin, the rub fastness of the printed items can be enhanced.

Further, because the ink includes the pigmentary synergist, the pigment and the solid resin that act as components of the colored resin particles can be blended more uniformly, enabling better micronization of the colored resin particles. As a result, discharge faults can be suppressed, and the intermittent dischargeability can be improved.

Furthermore, when the ink is prepared from an oil-in-oil emulsion, because the dispersed phase includes the pigmentary synergist in addition to the pigment and the solid resin, the emulsion stability can be enhanced, and as a result, colored resin particles of smaller particle size can be obtained.

Moreover, although it is difficult to reduce the particle size of the colored resin particles when a high-boiling point solvent is used, by including the pigmentary synergist in the colored resin particles, colored resin particles having a small particle size can be obtained using a high-boiling point solvent. By preparing the ink using a high-boiling point solvent, the intermittent dischargeability can be further improved.

In particular, an inkjet ink can be obtained which has a small particle size suited to inkjet discharge, as well as excellent intermittent dischargeability.

(Colored Resin Particles)

The colored resin particles in the present embodiment comprise a pigment, a solid resin, and a pigmentary synergist.

The colored resin particles may also comprise a liquid organic compound having an acidic group (hereafter sometimes abbreviated as simply "the acidic compound").

These colored resin particles preferably have a spherical particle shape in which the pigment, the solid resin, the pigmentary synergist and the optional acidic compound are mixed uniformly. Particularly, the colored resin particles preferably are the particles where the pigment, the pigmentary synergist and the optional acidic compound are dispersed in the solid resin with mixture state.

- Solid Resin

The solid resin is preferably a resin that is solid at room temperature (23°C).

In order to ensure stability of the particle shape, the glass transition temperature (Tg) of the solid resin is preferably at least 30°C, and more preferably 40°C or higher. The glass transition temperature of the solid resin is not particularly limited, but is preferably not higher than 150°C, and is more preferably 120°C or lower.

Further, in order to ensure stability of the particle shape, the melting temperature (Tm) of the solid resin is preferably at least 30°C, and more preferably 40°C or higher. The melting temperature of the solid resin is not particularly limited, but is preferably not higher than 250°C.

The weight-average molecular weight (Mw) of the solid resin is preferably within a range from 3,000 to 100,000, and more preferably from 5,000 to 80,000. Within this range, the stability of the shape of the colored resin particles can be enhanced. Further, in the production process for the colored resin particles, the raw materials including the solid resin can be mixed more uniformly with the solvent, and as a result, colored resin particles having a more uniform composition can be provided.

The weight-average molecular weight of the resin can be determined by the GPC method, and is calculated relative to standard polystyrenes. This also applies below.

The solid resin preferably has a Hansen solubility parameter (HSP value) of 22 to 27 $MPa/cm^3$. Further, the solid resin preferably has a dispersion parameter $\delta d$ of 13 to 20, a polar parameter $\delta p$ of 5 to 12, and a hydrogen bonding parameter $\delta h$ of 10 to 20. By ensuring these ranges are satisfied, the colored resin particles and the non-aqueous solvent can be separated rapidly when the inkjet ink is applied to paper, thus enabling a greater improvement in the abrasion resistance.

The method used for calculating the solubility parameter is described below. In the present invention, the three-dimensional solubility parameter proposed by Hansen in 1967 is used.

The Hansen solubility parameter divides the solubility parameter introduced by Hildebrand into 3 components, namely the dispersion parameter $\delta d$, the polar parameter $\delta p$, and the hydrogen bonding parameter $\delta h$, and is represented within a three-dimensional space. The dispersion parameter indicates the effects due to dispersive forces, the polar parameter indicates the effects due to dipolar intermolecular forces, and the hydrogen bonding parameter indicates the effects due to hydrogen bonding forces. A more detailed description is provided in "Polymer Handbook. Fourth Edition (Editors: J. Brandrup, E.H. Immergut, and E.A. Grulke)" or the like.

Any solid resin having the properties described above can be used favorably, and there are no particular limitations on the type of resin used.

Specific examples of the solid resin include alkylphenol resins, polyvinyl alcohols (PVA), (meth)acrylic-based resins, styrene-(meth)acrylic-based resins, styrene-maleic acid resins, cellulose-based resins, polyvinyl acetal resins, polyamide resins such as methoxymethylated nylon, ketone resins, rosin resins, vinyl acetate resins, polyvinylpyrrolidones, phosphorylated resins, nitrated solid resins such as nitrocellulose, alkoxy group-containing resins, polysilsesquioxanes, methoxysilsesquioxanes, ethoxysilsesquioxanes, and derivatives of these resins.

The above resins may be used individually, or a combination of two or more resins may be used.

The alkylphenol resin may be either a novolac-type alkylphenol resin or a resol-type alkylphenol resin, or a derivative of one of these resin types may be used.

Polyvinyl alcohols are generally produced using a polyvinyl acetate as a raw material, by substituting the acetate groups of the polyvinyl acetate with hydroxyl groups, and are therefore resins which contain acetate groups as well as hydroxyl groups depending on the degree of substitution.

If the molar ratio of units having a hydroxyl group relative to the combined total of all the units that constitute the polyvinyl alcohol is termed n, and the molar ratio of units having an acetate group ($-O-CO-CH_3$) is termed m, then the degree of saponification is represented by $(n/(n+m)) \times 100$, and the polymerization degree is represented by n+m.

The degree of saponification (n/(n+m))×100 for the polyvinyl alcohol is preferably from 0 to 60, and more preferably from 1 to 50.

The polymerization degree (n+m) of the polyvinyl alcohol is preferably from 10 to 1,000, and more preferably from 20 to 500.

For the polyvinyl acetal resin, a resin produced by acetalization of a polyvinyl alcohol (PVA) resin can be used. Specifically, by reacting a PVA resin with an aldehyde in the presence of an acid catalyst, some or all of the hydroxyl groups of the PVA resin are acetalized, enabling the production of a polyvinyl acetal resin.

For the polyvinyl acetal resin, a polyvinyl butyral resin (hereafter sometimes referred to as simply a "butyral resin") obtained by acetalizing a polyvinyl alcohol resin with butyraldehyde, or a polyvinyl formal resin (vinylon) obtained by acetalizing a polyvinyl alcohol resin with formaldehyde can be used favorably.

Examples of the cellulose-based resins include cellulose acetate resins, cellulose acetate butyrate resins and cellulose acetate propionate resins.

Examples of the nitrated resins include nitrocellulose, which is a nitrated ester of cellulose.

Examples of resins that can be used as the (meth)acrylic-based resin include not only (meth)acrylic resins having methacrylic units and/or acrylic units, but also copolymers having other units in addition to the methacrylic units and/or acrylic units. Examples of these other units include styrene-based units, vinyl carboxylate units, $\alpha$-olefin units, diene-based units, ethylenic unsaturated acid units, ethylenic unsaturated acid anhydride units, unsaturated carboxylic acid monoalkyl ester units, sulfonic acid units, nitrogen-containing units such as nitrile, pyridine and pyrrolidone, and ether-based units.

The (meth)acrylic-based resins can be obtained by polymerization of a conventional (meth)acrylic monomer. Examples of the (meth)acrylic monomer include (meth)acrylic acid; alkyl (meth)acrylate esters in which the alkyl group is a hydrocarbon group having a carbon number of 1 to 22 such as methyl (meth)acrylate; hydroxyalkyl (meth)acrylate esters of hydrocarbon groups having a carbon number of 2 to 8 such as 2-hydroxyethyl (meth)acrylate; mono (meth)acrylates of polyalkylene glycols (in which the number of alkylene glycol units is 2 or greater) such as polyethylene glycol mono(meth)acrylate; (meth)acrylate esters containing a polyalkylene oxide skeleton, including mono(meth)acrylate esters of alkoxypolyalkylene glycols such as methoxypolyethylene glycol mono(meth)acrylate; nitrogen-containing monomers such as (meth)acrylamide; and epoxy group-containing (meth)acrylates such as glycidyl (meth)acrylate. Combinations of two or more of these monomers may also be used.

Further, monomers other than the (meth)acrylic monomer (hereafter referred to as "other monomers") can be used in combination with the (meth)acrylic monomer. There are no particular limitations on the other monomer, provided it is copolymerizable with the (meth)acrylic monomer, and examples include styrene-based monomers such as styrene and $\alpha$-methylstyrene, vinyl carboxylate esters such as vinyl acetate, $\alpha$-olefin monomers such as ethylene, diene-based monomers such as butadiene, ethylenic unsaturated acids such as maleic acid and anhydrides thereof, unsaturated carboxylic acid monoalkyl esters such as maleic acid monoesters, nitrogen-containing unsaturated monomers such as (meth)acrylonitrile, unsaturated sulfonic acids such as (meth)allyl sulfonic acid, and vinyl ether-based monomers such as vinyl ethyl ether. Combinations of two or more of these monomers may also be used.

The (meth)acrylic-based resin preferably has a number-average molecular weight (Mn) of 5,000 to 25,000, and preferably has an acid value of 0 to 300 mgKOH/g, and more preferably 30 to 300 mgKOH/g.

Furthermore, a (meth)acrylic-based resin having styrene units can be used favorably as a styrene-(meth)acrylic-based resin. In this case, the ratio (molar ratio) between the styrene units and the (meth)acrylic units is preferably from 0:10 to 7:3.

Examples of commercially available styrene-(meth)acrylic-based resins that can be used include "UC-3920" and "UC-5041" from the ARUFON series manufactured by Toagosei Co., Ltd., and "VS-1047" and "VS-1291" and the like from the HIROS-X series manufactured by Seiko PMC Corporation.

The styrene-maleic acid resins are copolymers of styrene and maleic anhydride. Further, esterified products obtained by esterifying a styrene-maleic acid resin to introduce carboxyl groups or hydroxyl groups can also be used as the styrene-maleic acid resin.

Examples of products that can be used as the polyamide resin include nylon-6, nylon-66, nylon 4-6, and copolymer nylons.

Further, polyamide resins having alkoxy groups, obtained by alkoxymethylation of a polyamide resin, can also be used. For example, a methoxymethylated nylon can be used favorably.

By alkoxymethylating a polyamide resin, the solubility in alcohol solvents can be enhanced. Accordingly, during the production process for the resin particles, the pigment and the resin fraction can be mixed more uniformly and stably within the solvent.

Examples of the alkoxymethyl group include a methoxymethyl group and an ethoxymethyl group and the like.

Examples of commercially available polyamide resins include the Tohmide series and PA series manufactured by T&K TOKA Corporation, "FR-101", "FR-104", "FR-105", and "FR-301" and the like from the Fine Resin series manufactured by Namariichi Co., Ltd., and "Toresin F-30K" and "Toresin EF-30T" and the like from the Toresin series manufactured by Nagase ChemteX Corporation.

By using a nitrogen-containing resin as the solid resin, the dispersibility of the pigment can be improved during production of the colored resin particles. Among the resins described above, examples of resins that can be used favorably as the nitrogen-containing resin include nitrocellulose and polyamide resins having alkoxy groups.

Further, by using an aromatic ring-containing resin as the solid resin, $\pi$-$\pi$ interactions can be expected between the pigment and the aromatic ring-containing resin, thus enhancing the dispersibility of the pigment. Among the resins described above, examples of resins that can be used favorably as the aromatic ring-containing resin include styrene-based resins such as styrene-(meth)acrylic-based resins and styrene-maleic acid resins.

By enhancing the dispersibility of the pigment, each of the components of the colored resin particles can be dispersed more uniformly, and the particles can be better micronized, thus enhancing the rub fastness and the storage stability.

Further, by using a resin having superior water resistance as the solid resin, the water resistance of the printed items can be further enhanced. Examples of resins having superior water resistance among the solid resins described above include alkylphenol resins, polyvinyl alcohols (PVA), styrene-maleic acid resins, cellulose-based resins, polyvinyl acetal resins, polyamide resins having alkoxy groups, ketone resins, rosin resins, and vinyl acetate resins.

The blend amount of the solid resin described above, relative to the total mass of the colored resin particles, is preferably at least 10 mass%, and more preferably 20 mass% or greater.

On the other hand, the blend amount of the solid resin relative to the total mass of the colored resin particles is preferably not more than 70 mass%, and more preferably 50 mass% or less.

The colored resin particles may also contain one or more other resins besides the solid resin described above, provided the effects of the present invention are not impaired. As described below in relation to the method of producing the inkjet ink, examples of these other resins include pigment dispersants and additives and the like.

- Pigment

The colored resin particles comprise a pigment. Details of the pigment are described below.

From the viewpoints of the coloring properties and the uniformity of the components, the pigment is preferably added in an amount of 0.1 to 50 mass%, and more preferably 10 to 50 mass%, relative to the total mass of the colored resin particles.

- Acidic Compound

The colored resin particles may also comprise a liquid organic compound having an acidic group (the acidic compound). Here, a liquid organic compound having an acidic group describes an organic compound which is liquid at 23°C and contains an acidic group.

By adding the acidic compound, the color development properties and the abrasion resistance of the printed items can be further improved. This is because the acidic compound enables the pigment and the solid resin to be blended more uniformly and stably.

Further, when a resin having a low acid value and superior water resistance is used as the solid resin, the abrasion resistance can sometimes deteriorate, but by adding an acidic compound together with this type of solid resin, the water resistance and the abrasion resistance can be improved.

Further, the acidic compound can also be added during the production process for the inkjet ink for the purpose of maintaining the stability of the oil-in-oil emulsion.

In order to ensure that the acidic compound maintains a liquid state at room temperature, the melting point of the acidic compound is preferably 23°C or lower, and more preferably 15°C or lower.

The Hansen solubility parameter (HSP value) of the acidic compound is preferably from 22 to 27 MPa/cm$^3$. Further, the acidic compound preferably has a dispersion parameter $\delta$d of 13 to 20, a polar parameter $\delta$p of 5 to 12, and a hydrogen bonding parameter $\delta$h of 10 to 20. By ensuring these ranges are satisfied, the components of the colored resin particles can be blended more uniformly, the particle shape can be stabilized and the stability over time can be improved, and the color development and the abrasion resistance can be further improved.

Examples of the acidic group of the acidic compound include a phosphoric acid group, carboxyl group, sulfonic acid group, phosphate ester group, sulfate ester group, nitrate ester group, phosphorous acid group, phosphonic acid group and sulfinic acid group. Any one of these groups, or a combination of two or more groups, may be included within each molecule. The acidic compound preferably has two or more acidic groups within each molecule.

The acidic compound may be an oligomer, a polymer or a low-molecular weight compound.

Examples of the oligomer or polymer include poly(meth)acrylic-based resins, polyester-based resins, polyvinyl-based resins and polyether-based resins and the like, which may be used individually or in combinations. Further, copolymers of the monomers or oligomers that constitute these resins may also be used.

The acidic group may be derived from the monomer that constitutes the oligomer or polymer, thereby introducing an acidic group bonded to the main chain or side chain of each structural unit. Examples include copolymers or the like of a (meth)acrylate ester and (meth)acrylic acid. In such cases, carboxyl groups are introduced in accordance with the proportion of (meth)acrylic acid used. Further examples include copolymers of a (meth)acrylate ester and an acid-phosphoxy-(meth)acrylate. In such cases, phosphoric acid groups are introduced.

Further, the acidic groups may be introduced by phosphorylation of an oligomer or polymer. In such cases, phosphoric acid groups are introduced in accordance with the positions and proportion of hydroxyl groups. When the oligomer or polymer has hydroxyl groups at both terminals, phosphoric acid groups are introduced at both terminals of the oligomer or polymer, meaning the acidic compound has a total of two phosphoric acid groups.

When the acidic compound is an oligomer or a polymer, the weight-average molecular weight is preferably within a range from 500 to 10,000, and more preferably from 1,000 to 5,000.

Specific examples of the oligomer or polymer for the acidic compound include phosphate ester compounds, including polyoxyalkyl phosphate esters such as polyoxyethylene alkyl phosphate esters and polyoxyethylene polyoxypropylene phosphate esters, and polyether polyester phosphate esters; alkyl polyphosphonic acids; and carboxyl group-containing (meth)acrylic polymers. These compounds may be used individually, or a plurality of compounds may be combined.

Low-molecular weight compounds such as phosphate esters, sulfate esters, and 1-hydroxyethane-1,1-diphosphonic acid and the like may also be used as the acidic compound.

The acidic compound preferably has an acid value. The acid value of the acidic compound is preferably at least 30 mgKOH/g, more preferably 60 mgKOH/g or higher, and even more preferably 90 mgKOH/g or higher.

Here, the acid value describes the number of milligrams of potassium hydroxide needed to neutralize all of the acidic components within 1 g of the non-volatile fraction of the compound. This definition also applies below.

Among the various possibilities, liquid organic compounds having at least one of a phosphoric acid group, a phosphonic acid group, a phosphate ester group and a carboxyl group, and having an acid value of at least 30 mgKOH/g are preferable, and compounds having one or more phosphoric acid groups are particularly preferred. Further, acidic compounds having a phosphoric acid group at both terminals of the compound are particularly desirable.

Examples of commercially available products that can be used as the acidic compound include "DISPERBYK 102, 110, 111" (all product names) manufactured by BYK-Chemie Japan K.K., "TEGO Dispers 655" manufactured by Tomoe Engineering Co., Ltd., "Efka 6230" manufactured by Efka Chemicals B.V., "PH-210" manufactured by Chelest Corporation, "ARUFON UC3510" manufactured by Toagosei Co., Ltd., and "CM294P" manufactured by Unichemical Co., Ltd.

"DISPERBYK-111" is a phosphate ester compound of a block copolymer of ethylene glycol and polycaprolactone, and has phosphoric acid groups at both terminals of the copolymer.

The acidic compound is preferably added in an amount of 0.1 to 50 mass%, and more preferably 20 to 40 mass%, relative to the total mass of the colored resin particles. This enables the uniformity and stability of the colored resin particle components to be maintained, while avoiding any effects on other raw materials.

- Pigmentary Synergist

The colored resin particles also include a pigmentary synergist.

A compound in which a polar functional group has been introduced into a pigment backbone can be used as the pigmentary synergist.

In the present embodiment, by incorporating the pigmentary synergist within the colored resin particles, colored resin particles of smaller particle size can be obtained. When preparing the colored resin particles, mixing the pigmentary synergist together with the pigment and the solid resin makes it possible to reduce the particle size during micronization. It is thought that this is because the pigmentary synergist draws the pigment and the solid resin together.

In particular, the particle size of the colored resin particles can be reduced even when a high-boiling point solvent is used for the non-aqueous solvent. Accordingly, an inkjet ink having a small particle size can be provided even when a high-boiling point solvent is used to enhance the intermittent dischargeability.

Examples of materials that can be used favorably as the pigmentary synergist include compounds in which a functional group such as a carboxyl group, sulfonic acid group, amino group, nitro group, acid amide group, carbonyl group, carbamoyl group, phthalimide group or sulfonyl group or the like has been added to the structure of a phthalocyanine-based pigment, azo-based pigment, anthraquinone-based pigment or quinacridone-based pigment or the like, as well as salts of these compounds.

Specific examples include basic phthalocyanine pigmentary synergists into which an alkylaminomethyl group or the like has been introduced into copper phthalocyanine blue, acidic phthalocyanine pigmentary synergists into which a sulfonic acid group or metal salt or alkylamine salt thereof or the like has been introduced, neutral copper phthalocyanine pigmentary synergists into which a phthalimide group or the like has been introduced, asymmetric disazo yellow pigmentary synergists into which a functional group has been introduced at only one of the two terminal benzene rings, and Schiff base-type disazo yellow pigmentary synergists prepared by reaction with an aliphatic amine.

Further, condensed polycyclic pigmentary synergists such as quinacridone pigmentary synergists and anthraquinone pigmentary synergists into which similar functional groups to those mentioned for the phthalocyanine pigmentary synergists have been introduced can also be used favorably.

These compounds may be used individually, or a combination of compounds may be used.

Examples of commercially available pigmentary synergists that can be used favorably include Solsperse 5000 (a phthalocyanine pigmentary synergist), Solsperse 12000 (a phthalocyanine pigmentary synergist) and Solsperse 22000, manufactured by The Lubrizol Corporation, BYK-SYNERGIST 2100 (a phthalocyanine pigmentary synergist) and BYK-SYNERGIST 2105 (a yellow pigmentary synergist), manufactured by BYK-Chemie Japan K.K., and Efka 6745 (a phthalocyanine pigmentary synergist) and Efka 6750 (an azo pigmentary synergist) manufactured by BASH Corporation.

The pigmentary synergist preferably has a backbone that is the same as, or similar to, that of the pigment being used. For example, in the case where a carbon black or copper phthalocyanine blue is used as the pigment, the pigmentary synergist is preferably a phthalocyanine pigmentary synergist.

The amount of the pigmentary synergist relative to the total mass of the colored resin particles is preferably at least 0.25 mass%, more preferably at least 0.5 mass%, and even more preferably 0.75 mass% or greater. This enables colored resin particles having a small particle size to be obtained, and enables the prevention of discharge faults. Even in an ink that uses a high-boiling point solvent, the particle size of the colored resin particles can be reduced effectively.

The amount of the pigmentary synergist relative to the total mass of the colored resin particles is preferably not more than 10 mass%, more preferably not more than 7.5 mass%, and even more preferably 5 mass% or less. This prevents aggregation of the pigment due to excess pigmentary synergist.

The amount of the pigmentary synergist expressed as a mass ratio relative to a value of 1 for the pigment, is preferably within a range from 0.005 to 0.2, more preferably from 0.01 to 0.15, and even more preferably from 0.03 to 0.1.

Other optional components may also be added to the colored resin particles, provided they do not impair the effects of the present invention. Examples of these optional components include the various components added in the method of producing an ink described below. Further, a liquid organic compound that does not have an acidic group may also be added to the colored resin particles as a plasticizer. By adding a plasticizer, the various components of the colored resin particles can be blended even more uniformly. Examples of compounds that can be used as plasticizers include alcohols, esters, ethers, polyesters, polyethers and (meth)acrylic polymers.

The average particle size of the colored resin particles is preferably not more than about 10 $\mu$m, and is more preferably 5 $\mu$m or less, and even more preferably 1 $\mu$m or less. The average particle size of the colored resin particles may be adjusted appropriately in accordance with the type of recording medium, and for example in order to improve the color development and fixability for printed items using coated paper, this average particle size is preferably about 100 to 300 nm, and from the viewpoint of inhibiting show-through on printed items using plain paper, the average particle size is preferably 200 nm or less.

Here, the average particle size of the colored resin particles refers to the volume-based average particle size determined by a dynamic scattering method, and can be measured, for example, using a dynamic light scattering particle size distribution analyzer "LB-500" manufactured by Horiba, Ltd. This also applies below.

(Inkjet Ink)

The inkjet ink according to an embodiment of the present invention comprises the colored resin particles described above, together with a non-aqueous solvent and a basic dispersant. The non-aqueous solvent and the basic dispersant are as described below in relation to the method of producing the inkjet ink. The non-aqueous solvent is preferably a solvent capable of dispersing the colored resin particles. The basic dispersant is added for the purpose of dispersing the colored resin particles in the non-aqueous solvent. Further, the basic dispersant is sometimes added to adjust the emulsion in the production process for the colored resin particles described below.

In the inkjet ink according to the present embodiment, the amount of the colored resin particles relative to the total mass of the ink is preferably at least 1 mass%, more preferably 5 mass% or greater, and even more preferably 10 mass% or greater. This enables superior coloring properties as an ink, and also reduces the amount of solvent, thus enhancing the drying properties.

On the other hand, the amount of the colored resin particles relative to the total mass of the ink is preferably not more than 50 mass%, and is more preferably 40 mass% or less, and even more preferably 30 mass% or less. This enables the dispersibility and storage stability to be enhanced.

(Method of Producing Inkjet Ink)

Examples of the method of producing the inkjet ink according to the present embodiment are described below. However, the inkjet ink according to the present embodiment is not limited to inks produced using the following production methods.

Methods of preparing the inkjet ink can be broadly classified into chemical methods and physicochemical methods. Examples of the chemical methods include interfacial polycondensation methods, interfacial reaction methods (in situ polymerization methods), and in-liquid cured coating methods (orifice methods). Examples of the physicochemical methods include in-liquid drying methods (in-water drying methods and in-oil drying methods), coacervation methods, and fusion dispersion cooling methods.

The inkjet ink according to the present embodiment can be prepared, for example, using one of the physicochemical methods mentioned above. In-liquid drying methods can be used favorably, and an in-oil drying method of an oil-in-oil emulsion can be used particularly favorably.

By using an in-oil drying method of an oil-in-oil emulsion, the materials described above can be used to prepare colored resin particles having a small average particle size and a narrow particle size distribution, and a inkjet ink having a low viscosity can be prepared. As a result, an ink that is particularly suited to inkjet discharge can be obtained, and an inkjet ink having excellent abrasion resistance can be obtained.

An inkjet ink produced using an in-oil drying method of an oil-in-oil emulsion can be obtained using a phase containing at least the basic dispersant and a non-aqueous solvent as the continuous phase (hereafter the non-aqueous solvent of the continuous phase is sometimes referred to as "solvent A"), and a phase containing at least the pigment, the solid resin, the pigmentary synergist, the optional acidic compound and a non-aqueous solvent as the dispersed phase (hereafter the non-aqueous solvent of the dispersed phase is sometimes referred to as "solvent B"), by dispersing the dispersed phase in the continuous phase to prepare an oil-in-oil (O/O) emulsion, and then removing the solvent B of the dispersed phase from the emulsion.

In order to ensure stable preparation of the oil-in-oil emulsion, the solvent B preferably exhibits low solubility in the solvent A. Further, in order to enable removal of the solvent B, the solvent B preferably has a lower boiling point than that of the solvent A.

In order to ensure stable preparation of the oil-in-oil emulsion, the basic dispersant preferably has a higher solubility in the solvent A than in the solvent B. Further, in order to stabilize the shape of the colored resin particles, each of the pigment, the solid resin, the pigmentary synergist and the acidic compound preferably has a higher solubility in the solvent B than in the solvent A.

- Continuous Phase

The continuous phase contains the solvent A and the basic dispersant.

The solvent A may be selected appropriately from all manner of non-aqueous solvents, so as to satisfy the relationships described below with the solvent B and the solid resin.

Both non-polar organic solvents and polar organic solvents can be used as the non-aqueous solvent. These solvents may be used individually, or a combination of solvents may be used. The use of a non-aqueous organic solvent that does not mix uniformly with an equal volume of water at one atmosphere and 20°C is preferred.

Examples of preferred non-polar organic solvents include petroleum-based hydrocarbon solvents such as aliphatic hydrocarbon solvents, alicyclic hydrocarbon solvents and aromatic hydrocarbon solvents.

Examples of the aliphatic hydrocarbon solvents and alicyclic hydrocarbon solvents include paraffin-based, isoparaffin-based and naphthene-based non-aqueous solvents, and examples of commercially available products that can be used favorably include No. 0 Solvent L, No. 0 Solvent M, No. 0 Solvent H, Cactus Normal Paraffin N-10, Cactus Normal Paraffin N-11, Cactus Normal Paraffin N-12, Cactus Normal Paraffin N-13, Cactus Normal Paraffin N-14, Cactus Normal Paraffin N-15H, Cactus Normal Paraffin YHNP, Cactus Normal Paraffin SHNP, Isosol 300, Isosol 400, Teclean N-16, Teclean N-20, Teclean N-22, AF Solvent No. 4, AF Solvent No. 5, AF Solvent No. 6, AF Solvent No. 7, Naphtesol 160, Naphtesol 200 and Naphtesol 220 (all manufactured by JX Nippon Oil & Energy Corporation); and Isopar G, Isopar H, Isopar L, Isopar M, Exxsol D40, Exxsol D60, Exxsol D80, Exxsol D95, Exxsol D110 and Exxsol D130 (all manufactured by TonenGeneral Sekiyu K.K.).

Examples of preferred aromatic hydrocarbon solvents include Grade Alkene L and Grade Alkene 200P (both manufactured by JX Nippon Oil & Energy Corporation), and Solvesso 100, Solvesso 150, Solvesso 200 and Solvesso 200ND (all manufactured by TonenGeneral Sekiyu K.K.).

The initial boiling point (IBP) of the petroleum-based hydrocarbon solvent is preferably at least 100°C, more preferably 150°C or higher, and even more preferably 200°C or higher.

The end point (EP) for the petroleum-based hydrocarbon solvent is not particularly limited, but is preferably at least 200°C, more preferably 250°C or higher, and even more preferably 300°C or higher.

The initial boiling point and the end point can be measured in accordance with JIS K0066 "Test Methods for Distillation of Chemical Products".

In the present embodiment, even when a high-boiling point solvent is used, because the pigmentary synergist is used, the particle size of the colored resin particles can be kept small. Accordingly, from the viewpoint of the intermittent dischargeability, a petroleum-based hydrocarbon solvent having an initial boiling point of at least 250°C, and preferably 300°C or higher, can be used particularly favorably.

Examples of preferred polar organic solvents include fatty acid ester-based solvents, higher alcohol-based solvents and higher fatty acid-based solvents.

Specific examples include fatty acid ester-based solvents having a carbon number of 13 or higher, and preferably a carbon number of 16 to 30, within each molecule, such as isononyl isononanoate, isodecyl isononanoate, methyl laurate, isopropyl laurate, hexyl laurate, isopropyl myristate, isopropyl palmitate, hexyl palmitate, isooctyl palmitate, isostearyl palmitate, methyl oleate, ethyl oleate, isopropyl oleate, butyl oleate, hexyl oleate, methyl linoleate, ethyl linoleate, isobutyl linoleate, butyl stearate, hexyl stearate, isooctyl stearate, isopropyl isostearate, 2-octyldecyl pivalate, methyl soybean oil, isobutyl soybean oil, methyl tallate and isobutyl tallate;

higher alcohol-based solvents having a carbon number of 6 or higher, and preferably a carbon number of 12 to 20, within each molecule, such as isomyristyl alcohol, isopalmityl alcohol, isostearyl alcohol, oleyl alcohol, isoeicosyl alcohol and decyltetradecanol; and

higher fatty acid-based solvents having a carbon number of 12 or higher, and preferably a carbon number of 14 to 20, within each molecule, such as lauric acid, isomyristic acid, palmitic acid, isopalmitic acid, $\alpha$-linolenic acid, linoleic acid, oleic acid and isostearic acid.

The boiling point of the polar organic solvent such as the fatty acid ester-based solvent, higher alcohol-based solvent or higher fatty acid-based solvent is preferably at least 150°C, more preferably 200°C or higher, and even more preferably 250°C or higher. Non-aqueous solvents which do not display a boiling point are deemed to be included in non-aqueous solvents having a boiling point of 250°C or higher.

These non-aqueous solvents may be used individually, or two or more solvents may be combined, provided they form a single phase. Further, the solvent may also include other organic solvents, provided they can form a single phase with the non-aqueous solvent being used.

The solvent A preferably has a Hansen solubility parameter (HSP value) of 14 to 18 MPa/cm$^3$. Further, the solvent A preferably has a dispersion parameter $\delta$d of 12 to 20, a polar parameter $\delta$p of 0 to 4, and a hydrogen bonding parameter $\delta$h of 0 to 4.

By ensuring that the solubility parameters of the solvent A satisfy the above ranges, and that the solubility parameters of the solid resin of the colored resin particles satisfy the ranges described above, the dispersion stability of the colored resin particles in the solvent A can be improved. Further, when printing is performed using the inkjet ink, separation of the colored resin particles and the non-aqueous solvent on the paper can be accelerated, thereby enhancing the fixability of the colored resin particles to the paper and improving the abrasion resistance. This type of fixability effect manifests particularly strongly when printing to relatively impermeable papers such as coated papers.

In the inkjet ink that is formed following removal of the solvent B, the solvent A can be used, as is, as the non-aqueous solvent of the ink. Moreover, a non-aqueous solvent may also be added afterward to the ink.

In such a case, from the viewpoint of the intermittent dischargeability, it is preferable that the initial boiling point of the non-aqueous solvent within the final ink satisfies the range described below. The initial boiling point of the non-aqueous solvent within the final ink refers to the initial boiling point of the single non-aqueous solvent when a single non-aqueous solvent is used, and refers to the initial boiling point of the mixed solvent when a mixed solvent containing two or more non-aqueous solvents mixed together in an arbitrary ratio is used. The initial boiling point of a polar solvent can be determined in the same manner as that of a non-polar solvent.

The initial boiling point of the final non-aqueous solvent is preferably at least 100°C, more preferably 150°C or higher, and even more preferably 200°C or higher. Moreover, the initial boiling point of the non-aqueous solvent is preferably at least 250°C, and more preferably 300°C or higher.

The basic dispersant is a dispersant having a basic group. The basic dispersant preferably has a higher solubility in the solvent A than in the solvent B.

The solubility of the basic dispersant in the solvent B at 23°C is preferably not more than 3 g/100g, and more preferably 0.5 g/100g or less. Further, the solubility of the basic dispersant in the solvent A at 23°C is preferably at least 3 g/100g, and more preferably 5 g/100g or greater. It is even more preferable that the basic dispersant is selected so that, in the blend proportions used in the oil-in-oil emulsion, the basic dispersant dissolves essentially entirely in the solvent A, and undergoes essentially no dissolution in the solvent B.

Examples of the basic group of the basic dispersant include an amino group, amide group and pyridyl group, and among these, an amino group is preferable. Further, other examples of the basic group of the basic dispersant include nitrogen-containing functional groups having a urethane linkage or the like. Furthermore, nitrogen-containing structural units such as a urethane linkage may be introduced into the basic dispersant.

Examples of the basic dispersant include modified polyurethanes, basic group-containing poly(meth)acrylates, basic group-containing polyesters, polyesteramines, quaternary ammonium salts, alkylamine salts such as stearylamine acetate, and fatty acid amine salts. These compounds may be used individually, or a plurality of compounds may be combined. Further, an amine-modified (meth)acrylic block polymer having a first block containing a structural unit having an alkyl group with a carbon number of 12 or higher, and a second block containing a structural unit having an amino group may also be used as the basic dispersant.

Examples of commercially available basic dispersants include:

Solsperse 13940 (a polyester amine-based dispersant), 17000 and 18000 (fatty acid amine-based dispersants), and 11200, 22000, 24000 and 28000" (all product names), manufactured by Lubrizol Japan Ltd.,
DISPERBYK 116, 2096 and 2163 (all product names), manufactured by BYK-Chemie Japan K.K.,
ACETAMIN 24 and 86 (alkylamine salt-based dispersants) (both product names), manufactured by Kao Corporation, and
DISPARLON KS-860 and KS-873N4 (high-molecular weight polyester amine salts) (both product names), manufactured by Kusumoto Chemicals, Ltd.

The basic dispersant preferably has a base value. The base value of the basic dispersant is preferably at least 1 mgKOH/g, more preferably 10 mgKOH/g or higher, and even more preferably 15 mgKOH/g or higher. This ensures that a fine and stable inkjet ink can be prepared.

Here, the base value describes the number of milligrams of potassium hydroxide equivalent to the amount of hydrochloric acid needed to neutralize all of the basic components contained within 1 g of the non-volatile fraction of the compound. This definition also applies below.

From the viewpoints of the stability of the emulsion and the dispersibility of the colored resin particles, the amount of the basic dispersant within the continuous phase is preferably from 0.1 to 15 mass%, and more preferably from 1 to 10 mass%, relative to the total mass of the continuous phase.

From the viewpoint of the dispersibility of the colored resin particles, the amount of the basic dispersant following removal of the solvent B is preferably from 0.1 to 20 mass%, and more preferably from 1 to 15 mass%, relative to the total mass of the inkjet ink.

Other optional components such as antioxidants, surface tension regulators and antifoaming agents may be added to the continuous phase, provided they do not impair the effects of the present invention.

- Dispersed Phase

The dispersed phase contains the solvent B, the pigment, the solid resin, the pigmentary synergist and the optional acidic compound.

The solubility of the solvent B in the aforementioned solvent A at 23°C is preferably not more than 3 g/100g, and the boiling point of the solvent B is preferably lower than that of the solvent A.

The solvent B is preferably a polar organic solvent, and is more preferably a lower alcohol-based solvent. Examples of this lower alcohol-based solvent include isopropyl alcohol, ethylene glycol, ethanol, methanol, propanol and butanol. Lower alcohol-based solvents having a carbon number of 4 or less are particularly preferable.

Other specific examples of the solvent B include acetone, methyl ethyl ketone, and ethyl acetate and the like. Moreover, the solvent B may be selected appropriately so as to satisfy specific relationships with the aforementioned solvent A, the basic dispersant and the resin.

These solvents may be used individually, or a plurality of solvents may be combined.

The solubility of the solvent B in the solvent A at 23°C is preferably not more than 3 g/100g, and is more preferably 1 g/100g or less, and even more preferably 0.5 g/100 g or less. It is even more preferable that the solvent B is essentially insoluble in the solvent A.

The difference in the boiling points of the solvent B and the solvent A is preferably at least 10°C, more preferably 20°C or greater, and even more preferably 50°C or greater. In the case of a mixed solvent such as a petroleum-based hydrocarbon solvent, the initial boiling point is used as the boiling point.

Further, the boiling point of the solvent B is preferably not higher than 100°C, and is more preferably 90°C or lower. On the other hand, there are no particular limitations on the lower limit for the boiling point of the solvent B, provided the solvent B is liquid within a range from -20 to 90°C.

The solvent B preferably has a Hansen solubility parameter (HSP value) of 18 to 30 MPa/cm$^3$, and more preferably 20 to 30 MPa/cm$^3$. Further, the solvent B preferably has a dispersion parameter $\delta$d of 14 to 17, a polar parameter $\delta$p of 5 to 15, and a hydrogen bonding parameter $\delta$h of 5 to 25, and more preferably has a dispersion parameter $\delta$d of 14 to 17, a polar parameter $\delta$p of 5 to 15, and a hydrogen bonding parameter $\delta$h of 15 to 25.

By ensuring that the solubility parameters of the solvent B satisfy the above ranges, the solubility in the solvent A can be kept low, and the solvent can be provided with the ability to dissolve both the colored resin particles and the solid resin. Provided the solubility parameters of the colored resin particles and the solid resin satisfy the ranges described above, they will dissolve in the solvent B but be insoluble in the solvent A, meaning good dispersion stability can be obtained.

Further, it is preferable that the solvent A is a hydrocarbon-based solvent, and the solvent B is an alcohol-based solvent having a carbon number of 4 or less. Preferred examples of the hydrocarbon-based solvent include naphthene, paraffin, and isoparaffin and the like, whereas preferred examples of the alcohol-based solvent having a carbon number of 4 or less include methanol, ethanol, propanol and butanol, with methanol being particularly preferable.

The solubility of the pigment in the solvent A at 23°C is preferably not more than 3 g/100g, and is more preferably 1 g/100g or less, and even more preferably 0.5 g/100g or less. It is even more preferable that the pigment is selected so that, in the blend proportions used in the oil-in-oil emulsion, the pigment is essentially insoluble in the solvent A.

Organic pigments such as azo pigments, phthalocyanine pigments, polycyclic pigments and dye lake pigments, and inorganic pigments such as carbon blacks and metal oxides can be used as the pigment. Examples of the azo pigments include soluble azo lake pigments, insoluble azo pigments and condensed azo pigments. Examples of the phthalocyanine pigments include metal phthalocyanine pigments and metal-free phthalocyanine pigments. Examples of the polycyclic pigments include quinacridone-based pigments, perylene-based pigments, perinone-based pigments, isoindoline-based pigments, isoindolinone-based pigments, dioxazine-based pigments, thioindigo-based pigments, anthraquinone-based pigments, quinophthalone-based pigments, metal complex pigments and diketopyrrolopyrrole (DPP). Examples of the carbon blacks include furnace carbon black, lamp black, acetylene black and channel black. Examples of the metal oxides include titanium oxide and zinc oxide. These pigments may be used individually, or a combination of two or more pigments may be used.

The average particle size of the pigment is preferably not more than 300 nm, and more preferably 200 nm or less. This ensures that the dispersibility of the pigment within the dispersed phase can be maintained favorably, and also ensures that the particle size of the final colored resin particles is appropriate.

The amount of the pigment in the dispersed phase is preferably from 0.1 to 50 mass%, more preferably from 1 to 40 mass%, and even more preferably from 2 to 20 mass%, relative to the total mass of the dispersed phase. This ensures stable solubility or dispersibility of the pigment within the solvent B.

Following removal of the solvent B, the amount of the pigment relative to the total mass of the inkjet ink is preferably from 0.1 to 50 mass%, more preferably from 1 to 40 mass%, and even more preferably from 2 to 20 mass%. This ensures that the colored resin particles have appropriate coloring properties, and can also stabilize the particle shape.

In order to ensure stable dispersion of the pigment within the dispersed phase, namely within the solvent B, a pigment dispersant may also be included in the dispersed phase.

An anionic dispersant, cationic dispersant or nonionic dispersant may be used as the pigment dispersant, and the dispersant may be selected appropriately in accordance with the other components of the emulsion. Further, the pigment dispersant may use either a high-molecular weight compound or a low-molecular weight compound (surfactant).

Examples of the pigment dispersant include hydroxyl group-containing carboxylate esters, salts of high-molecular weight polycarboxylic acids, naphthalenesulfonic acid formalin condensate salts, polyoxyethylene alkyl phosphate esters, salts of long-chain polyaminoamides and high-molecular weight acid esters, salts of long-chain polyaminoamides and polar acid esters, polyester polyamines, stearylamine acetate, high-molecular weight unsaturated acid esters, polyoxyethylene nonylphenyl ethers, high-molecular weight copolymers, modified polyurethanes, and modified polyacrylates and the like.

These dispersants may be used individually, or a plurality of dispersants may be combined.

The blend amount of the pigment dispersant may be set as appropriate, but from the viewpoint of the pigment dispersibility, the mass ratio relative to 1 part of the pigment is preferably about 0.05 to 2.0 parts, more preferably from 0.1 to 1.0 parts, and even more preferably from 0.2 to 0.6 parts.

A dye may also be included in the dispersed phase together with the pigment. Using a dye can supplement the coloring properties of the pigment.

Any of the dyes typically used in this technical field can be used, and examples include basic dyes, acid dyes, direct dyes, soluble vat dyes, acid mordant dyes, mordant dyes, reactive dyes, vat dyes, sulfide dyes, metal complex dyes and salt-forming dyes. These dyes may be used individually, or a plurality of dyes may be combined.

The amount of the dye in the dispersed phase, relative to the total mass of the dispersed phase, is preferably from 0.1 to 50 mass%, and more preferably from 1 to 40 mass%.

Following removal of the solvent B, the amount of the dye, relative to the total mass of the inkjet ink, is preferably from 0.1 to 50 mass%, more preferably from 1 to 40 mass%, and even more preferably from 2 to 20 mass%.

The proportion of the dye within the combined colorant including the pigment and the dye is preferably not more than 10 mass%, and is more preferably 5 mass% or less.

The solid resin is preferably a resin that is solid at room temperature (23°C). Details are as described above.

When the colored resin particles are produced using an oil-in-oil emulsion, it is preferable that this solid resin has a higher solubility in the solvent B than in the solvent A.

The solubility of the solid resin in the solvent B at 23°C is preferably at least 10 g/100g, and more preferably 20 g/100g or greater. Further, the solubility of the solid resin in the solvent A at 23°C is preferably not more than 3 g/100g, more preferably 1 g/100g or less, and even more preferably 0.5 g/100g or less. It is even more preferable that, in the blend proportions used in the oil-in-oil emulsion, the solid resin dissolves essentially entirely in the solvent B, and undergoes essentially no dissolution in the solvent A.

The amount of the solid resin relative to the total mass of the dispersed phase is preferably from 0.1 to 50 mass%, more preferably from 1 to 40 mass%, and even more preferably from 2 to 20 mass%. This ensures appropriate solubility of the solid resin in the solvent B, and enables a more even distribution of the components of the colored resin particles.

The amount of the solid resin relative to the total mass of the inkjet ink following removal of the solvent B is preferably from 0.1 to 20 mass%, and more preferably from 1 to 15 mass%. This ensures that the coloring of the colored resin particles is appropriate, and that the shape of the particles can be stabilized.

The mass ratio between the solid resin and the pigment preferably satisfies (mass of solid resin) / (mass of pigment) $\geq$ 0.5. When this range is satisfied, mixing and stirring of the continuous phase and the dispersed phase is able to provide an oil-in-oil emulsion having excellent emulsion stability.

The acidic compound is a liquid organic compound having an acidic group. Details are as described above.

There are no particular limitations on the acidic compound, but the compound preferably has a higher solubility in the solvent B than in the solvent A. The solubility of the acidic compound in the solvent B at 23°C is preferably at least 1 g/100g, and more preferably 2 g/100g or greater. Further, the solubility of the acidic compound in the solvent A at 23°C is preferably not more than 3 g/100g, more preferably 1 g/100g or less, and even more preferably 0.5 g/100g or less. It is even more preferable that, in the blend proportions used in the oil-in-oil emulsion, the acidic compound dissolves essentially entirely in the solvent B, and undergoes essentially no dissolution in the solvent A.

The amount of the acidic compound relative to the total mass of the dispersed phase is preferably from 0.1 to 25 mass%, and more preferably from 1 to 20 mass%. This enables the emulsion to be better stabilized.

The amount of the acidic compound relative to the total mass of the inkjet ink following removal of the solvent B is preferably from 0.1 to 20 mass%, and more preferably from 1 to 15 mass%. This enables the abrasion resistance to be further enhanced.

The mass ratio between the acidic compound and the pigment preferably satisfies (mass of acidic compound) / (mass of pigment) $\geq$ 0.5. When this range is satisfied, mixing and stirring of the continuous phase and the dispersed phase is able to provide an oil-in-oil emulsion having excellent emulsion stability.

Details regarding the pigmentary synergist included in the dispersed phase are as described above.

The amount of the pigmentary synergist relative to the total mass of the dispersed phase is preferably from 0.05 to 5 mass%, and more preferably from 0.1 to 2.5 mass%.

The amount of the pigmentary synergist relative to the total mass of the inkjet ink following removal of the solvent B is preferably from 0.01 to 2.5 mass%, and more preferably from 0.1 to 1.5 mass%. This enables the actions of the pigmentary synergist to manifest satisfactorily, and prevents aggregation of the pigment.

Other optional components such as antifoaming agents, antioxidants, surface tension regulators, crosslinking agents and plasticizers may also be added to the dispersed phase, provided they do not impair the effects of the present invention.

- Method of Preparing Inkjet Ink

The method used for preparing the inkjet ink is not particularly limited, and the ink can be prepared by dispersing the dispersed phase described above in the continuous phase described above to prepare an oil-in-oil emulsion, and then removing the non-aqueous solvent B from the dispersed phase of the oil-in-oil emulsion.

For example, the continuous phase and the dispersed phase can be prepared by mixing the various components described above. Subsequently, the dispersed phase can be dispersed in the continuous phase by mixing and stirring the two phases while the dispersed phase is added dropwise to the continuous phase. At this time, the mixing and stirring can be performed using an ultrasonic homogenizer. The non-aqueous solvent B can then be removed from the obtained oil-in-oil emulsion under reduced pressure and/or heating. At this time, the degree of pressure reduction and/or heating is adjusted so that the non-aqueous solvent B is removed but the non-aqueous solvent A is retained.

Examples of the method used for dispersing the pigment in the dispersed phase include methods using typical wet dispersion devices such as a ball mill, beads mill, ultrasound, homomixer or high-pressure homogenizer.

Further, the mass ratio between the continuous phase and the dispersed phase in the oil-in-oil emulsion can be adjusted within a range from 40:60 to 95:5. The amount added of the non-aqueous solvent B is preferably from 5 to 40 mass%, and more preferably from 5 to 30 mass%, relative to the total mass of the oil-in-oil emulsion. Further, the amount removed of the non-aqueous solvent B is preferably the total amount added of the non-aqueous solvent B, but any amount that is 90 mass% or more of the total amount added of the non-aqueous solvent B is acceptable.

In the inkjet ink, the average particle size of the colored resin particles is preferably as described above.

The average particle size of the colored resin particles can be controlled by adjusting the amount of the basic dispersant added to the continuous phase, or the amount of the non-volatile fraction included in the dispersed phase or the like. By adding the acidic compound, the average particle size of the colored resin particles can be reduced to an even smaller size.

The dispersion prepared from the oil-in-oil emulsion described above can be used, as is, as the inkjet ink according to the present embodiment, but if required, the dispersion may also include any of the various additives typically used in the field, provided these additives do not impair the objects of the present invention. For example, nozzle blockage prevention agents, antioxidants, conductivity modifiers, viscosity modifiers, surface tension regulators, and oxygen absorbers and the like may be added as appropriate. There are no particular limitations on the types of these additives, and any additives used in the technical field can be used. Further, the dispersion may be further diluted with a non-aqueous solvent described above to prepare the ink.

The ideal range for the viscosity of the inkjet ink varies depending on factors such as the diameter of the nozzles within the discharge head of the inkjet recording system and the discharge environment, but generally, the viscosity at 23°C is preferably within a range from 5 to 30 mPa·s, more preferably from 5 to 15 mPa·s, and most preferably about 10 mPa·s.

There are no particular limitations on the printing method used with the inkjet ink, and any of various printing systems, including a piezo system, electrostatic system or thermal system may be used. In those cases where an inkjet recording device is used, the ink of the present embodiment is preferably discharged from the inkjet head based on a digital signal, with the discharged ink droplets being adhered to the recording medium.

In the present embodiment, there are no particular limitations on the recording medium, and examples of media that can be used include printing papers such as plain papers, coated papers and specialty papers, cloth, inorganic sheets, films and OHP sheets, and adhesive sheets having one of the above media as a base material and then having an adhesive layer provided on the rear surface. Among these, from the viewpoint of ink penetration, a printing paper such as a plain paper or coated paper can be used particularly favorably.

Here, plain paper describes a normal paper in which an ink receiving layer or film layer or the like has not been formed on the surface of the paper. Examples of plain papers include high-quality papers, medium-quality papers, PPC papers, woody papers and recycled papers. In a plain paper, paper fibers with a thickness of several $\mu$m to several tens of $\mu$m are formed with a spacing between fibers of several tens to several hundred $\mu$m, and therefore the ink can penetrate readily.

Further, in terms of coated papers, coated papers designed for inkjets, and other so-called coated printing papers can be used favorably. A coated printing paper describes the type of paper that has conventionally been used in relief printing, offset printing, and gravure printing and the like, and is a printing paper in which a coating layer is formed on the surface of a high-quality paper or medium-quality paper using a coating material containing an inorganic pigment such as clay or calcium carbonate and a binder such as starch. Depending on the amount applied of the coating material and the coating method used, coated printing papers are classified into fine coated papers, high-quality lightweight coated papers, medium-quality lightweight coated papers, high-quality coated papers, medium-quality coated papers, art papers, and cast coated papers and the like. Coated printing papers have minimal gaps on the paper surface compared with plain papers and coated papers designed for inkjets, and therefore penetration of the ink is slow, and the ink components are more readily retained on the surface of the paper. As a result, the ink according to the present embodiment is suitable for improving the fixability to coated printing papers.

EXAMPLES

The present invention is described below in further detail using a series of examples, but the present invention is in no way limited by these examples. Unless specifically state otherwise, "%" refers to "mass%".

<Ink Preparation>

Formulations of oil-in-oil emulsions for a series of examples and comparative examples prior to removal of the solvent B are shown in Table 1 to Table 3. In each table, when a dispersant includes a volatile component, the total amount of the dispersant is shown, and the non-volatile fraction amount is also shown in parentheses (this also applies in Tables 4 to 6 below).

The continuous phase was prepared by mixing the solvent A and the basic dispersant in the blend amounts shown in each table. Subsequently, the dispersed phase was prepared by mixing the pigment, the solid resin, the acidic compound and the pigmentary synergist with the solvent B in the blend amounts shown in each table, and then dispersing the resulting mixture using a beads mill.

With the continuous phase in a state of continuous stirring with a magnetic stirrer, a 10 minute irradiation with an ultrasonic homogenizer (Ultrasonic Processor VC-750, manufactured by Sonics & Materials, Inc.) was conducted under ice cooling while the premixed dispersed phase was added dropwise to the continuous phase, thus obtaining an oil-in-oil (O/O) emulsion.

The solvent B within the dispersed phase was removed from the obtained emulsion under reduced pressure using an evaporator, thus obtaining an inkjet ink. The rate of removal of the solvent B was essentially 100 mass%.

Formulations of the inks of the examples and comparative examples following removal of the solvent B are shown in Table 4 to Table 6. The colored resin particles fraction (the acidic compound, the solid resin, the pigment and the pigmentary synergist) relative to the total mass of the ink was determined, and this fraction is also shown in each table.

### [Table 1]  Formulations of oil-in-oil emulsions of Examples (prior to solvent B removal)

| Units: mass% | | Example 1 | Example 2 | Example 3 | Example 4 | Example 5 | Example 6 |
|---|---|---|---|---|---|---|---|
| Continuous phase | Solvent A [Isopar M] | 24.50 | - | 14.70 | 24.50 | 24.50 | 34.30 |
| | Solvent A [AF6] | 24.50 | - | 34.30 | 24.50 | 24.50 | 14.70 |
| | Solvent A [AF5] | - | 49.00 | - | - | - | - |
| | Basic dispersant (non-volatile fraction 50%) | 6.00 (3.00) | 6.00 (3.00) | 6.00 (3.00) | 6.00 (3.00) | 6.00 (3.00) | 6.00 (3.00) |
| Dispersed phase | Solvent B [methanol] | 29.50 | 29.50 | 29.50 | 29.80 | 29.50 | 29.50 |
| | Carbon black | 5.00 | 5.00 | 5.00 | 5.00 | 5.00 | 5.00 |
| | Nitrocellulose | 5.00 | 5.00 | 5.00 | 5.00 | 5.00 | 5.00 |
| | Styrene-acrylic polymer | - | - | - | - | - | - |
| | Methoxymethylated nylon | - | - | - | - | - | - |
| | Polyvinyl alcohol | - | - | - | - | - | - |
| | Pigmentary synergist 1 | 0.50 | 0.50 | 0.50 | 0.20 | - | - |
| | Pigmentary synergist 2 | - | - | - | - | 0.50 | 0.50 |
| | Pigmentary synergist 3 | - | - | - | - | - | - |
| | Acidic compound (non-volatile fraction 95%) | 5.00 (4.75) | 5.00 (4.75) | 5.00 (4.75) | 5.00 (4.75) | 5.00 (4.75) | 5.00 (4.75) |
| Total (mass%) | | 100.00 | 100.00 | 100.00 | 100.00 | 100.00 | 100.00 |

[Table 2] Formulations of oil-in-oil emulsions of Examples (prior to solvent B removal)

| | Units: mass% | Example 7 | Example 8 | Example 9 | Example 10 | Example 11 | Example 12 |
|---|---|---|---|---|---|---|---|
| Continuous phase | Solvent A [Isopar M] | 24.50 | - | 24.50 | 24.50 | 24.50 | 24.50 |
| | Solvent A [AF6] | 24.50 | - | 24.50 | 24.50 | 24.50 | 24.50 |
| | Solvent A [AF5] | - | 49.00 | - | - | - | - |
| | Basic dispersant (non-volatile fraction 50%) | 6.00 (3.00) | 6.00 (3.00) | 6.00 (3.00) | 6.00 (3.00) | 6.00 (3.00) | 6.00 (3.00) |
| Dispersed phase | Solvent B [methanol] | 34.50 | 29.50 | 29.50 | 29.80 | 29.50 | 29.50 |
| | Carbon black | 5.00 | 5.00 | 5.00 | 5.00 | 5.00 | 5.00 |
| | Nitrocellulose | 5.00 | 5.00 | - | - | - | - |
| | Styrene-acrylic polymer | - | - | 5.00 | 5.00 | - | - |
| | Methoxymethylated nylon | - | - | - | - | 5.00 | - |
| | Polyvinyl alcohol | - | - | - | - | - | 5.00 |
| | Pigmentary synergist 1 | - | - | 0.50 | 0.20 | 0.50 | 0.50 |
| | Pigmentary synergist 2 | 0.50 | - | - | - | - | - |
| | Pigmentary synergist 3 | - | 0.50 | - | - | - | - |
| | Acidic compound (non-volatile fraction 95%) | - | 5.00 (4.75) | 5.00 (4.75) | 5.00 (4.75) | 5.00 (4.75) | 5.00 (4.75) |
| Total (mass%) | | 100.00 | 100.00 | 100.00 | 100.00 | 100.00 | 100.00 |

[Table 3] Formulations of oil-in-oil emulsions of Comparative Examples (prior to solvent B removal)

| Units: mass% | | Comparative Example 1 | Comparative Example 2 | Comparative Example 3 | Comparative Example 4 | Comparative Example 5 |
|---|---|---|---|---|---|---|
| Continuous phase | Solvent A [Isopar M] | 24.50 | - | 24.50 | 24.50 | 24.50 |
| | Solvent A [AF6] | 24.50 | - | 24.50 | 24.50 | 24.50 |
| | Solvent A [AF5] | - | 49.00 | - | - | - |
| | Basic dispersant (non-volatile fraction 50%) | 6.00 (3.00) | 6.00 (3.00) | 6.00 (3.00) | 6.00 (3.00) | 6.00 (3.00) |
| Dispersed phase | Solvent B [methanol] | 30.00 | 30.00 | 30.00 | 30.00 | 30.00 |
| | Carbon black | 5.00 | 5.00 | 5.00 | 5.00 | 5.00 |
| | Nitrocellulose | 5.00 | 5.00 | - | - | - |
| | Styrene-acrylic polymer | - | - | 5.00 | - | - |
| | Methoxymethylated nylon | - | - | - | 5.00 | - |
| | Polyvinyl alcohol | - | - | - | - | 5.00 |
| | Pigmentary synergist 1 | - | - | - | - | - |
| | Pigmentary synergist 2 | - | - | - | - | - |
| | Pigmentary synergist 3 | - | - | - | - | - |
| | Acidic compound (non-volatile fraction 95%) | 5.00 (4.75) | 5.00 (4.75) | 5.00 (4.75) | 5.00 (4.75) | 5.00 (4.75) |
| Total (mass%) | | 100.00 | 100.00 | 100.00 | 100.00 | 100.00 |

[Table 4] Formulations of inks of Examples (after solvent B removal)

| Units: mass% | | Example 1 | Example 2 | Example 3 | Example 4 | Example 5 | Example 6 |
|---|---|---|---|---|---|---|---|
| Continuous phase | Solvent A [Isopar M] | 34.75 | - | 20.85 | 34.90 | 34.75 | 48.65 |
| | Solvent A [AF6] | 34.75 | - | 48.65 | 34.90 | 34.75 | 20.85 |
| | Solvent A [AF5] | - | 69.50 | - | - | - | - |
| | Basic dispersant (non-volatile fraction 50%) | 8.51 (4.26) | 8.51 (4.26) | 8.51 (4.26) | 8.55 (4.28) | 8.51 (4.26) | 8.51 (4.26) |
| Dispersed phase | Solvent B [methanol] | - | - | - | - | - | - |
| | Carbon black | 7.09 | 7.09 | 7.09 | 7.12 | 7.09 | 7.09 |
| | Nitrocellulose | 7.09 | 7.09 | 7.09 | 7.12 | 7.09 | 7.09 |
| | Styrene-acrylic polymer | - | - | - | - | - | - |
| | Methoxymethylated nylon | - | - | - | - | - | - |
| | Polyvinyl alcohol | - | - | - | - | - | - |
| | Pigmentary synergist 1 | 0.71 | 0.71 | 0.71 | 0.28 | - | - |
| | Pigmentary synergist 2 | - | - | - | - | 0.71 | 0.71 |
| | Pigmentary synergist 3 | - | - | - | - | - | - |
| | Acidic compound (non-volatile fraction 95%) | 7.09 (6.74) | 7.09 (6.74) | 7.09 (6.74) | 7.12 (6.76) | 7.09 (6.74) | 7.09 (6.74) |
| Total (mass%) | | 100.00 | 100.00 | 100.00 | 100.00 | 100.00 | 100.00 |
| Colored resin particles fraction (mass%) | | 21.63 | 21.63 | 21.63 | 21.28 | 21.63 | 21.63 |
| Evaluation results | Intermittent dischargeability | A | A | A | A | A | B |
| | Emulsifiability | A | A | A | A | A | A |
| | Particle size | A | A | A | A | A | A |
| | Storage stability | A | A | A | A | A | A |
| | Rub fastness | A | A | A | A | A | A |

[Table 5] Formulations of inks of Examples (after solvent B removal)

| Units: mass% | | Example 7 | Example 8 | Example 9 | Example 10 | Example 11 | Example 12 |
|---|---|---|---|---|---|---|---|
| Continuous phase | Solvent A [Isopar M] | 37.40 | - | 34.75 | 34.90 | 34.75 | 34.75 |
| | Solvent A [AF6] | 37.40 | - | 34.75 | 34.90 | 34.75 | 34.75 |
| | Solvent A [AF5] | - | 69.50 | - | - | - | - |
| | Basic dispersant (non-volatile fraction 50%) | 9.16 (4.58) | 8.51 (4.26) | 8.51 (4.26) | 8.55 (4.28) | 8.51 (4.26) | 8.51 (4.26) |
| Dispersed phase | Solvent B [methanol] | - | - | - | - | - | - |
| | Carbon black | 7.63 | 7.09 | 7.09 | 7.12 | 7.09 | 7.09 |
| | Nitrocellulose | 7.63 | 7.09 | - | - | - | - |
| | Styrene-acrylic polymer | - | - | 7.09 | 7.12 | - | - |
| | Methoxymethylated nylon | - | - | - | - | 7.09 | - |
| | Polyvinyl alcohol | - | - | - | - | | 7.09 |
| | Pigmentary synergist 1 | - | - | 0.71 | 0.28 | 0.71 | 0.71 |
| | Pigmentary synergist 2 | 0.76 | - | - | - | - | - |
| | Pigmentary synergist 3 | - | 0.71 | - | - | - | - |
| | Acidic compound (non-volatile fraction 95%) | - | 7.09 (6.74) | 7.09 (6.74) | 7.12 (6.76) | 7.09 (6.74) | 7.09 (6.74) |
| Total (mass%) | | 100.00 | 100.00 | 100.00 | 100.00 | 100.00 | 100.00 |
| Colored resin particles fraction (mass%) | | 16.02 | 21.63 | 21.63 | 21.38 | 21.63 | 21.63 |
| Evaluation results | Intermittent dischargeability | B | A | A | A | A | B |
| | Emulsifiability | B | A | A | A | A | B |
| | Particle size | B | A | A | A | A | B |
| | Storage stability | B | A | A | A | A | B |
| | Rub fastness | B | A | A | A | A | B |

### [Table 6] Formulations of inksof Comparative Examples (after solvent B removal)

| Units: mass% | | Comparative Example 1 | Comparative Example 2 | Comparative Example 3 | Comparative Example 4 | Comparative Example 5 |
|---|---|---|---|---|---|---|
| Continuous phase | Solvent A [Isopar M] | 35.00 | - | 35.00 | 35.00 | 35.00 |
| | Solvent A [AF6] | 35.00 | - | 35.00 | 35.00 | 35.00 |
| | Solvent A [AF5] | - | 70.00 | - | - | - |
| | Basic dispersant (non-volatile fraction 50%) | 8.57 (4.29) | 8.57 (4.29) | 8.57 (4.29) | 8.57 (4.29) | 8.57 (4.29) |
| Dispersed phase | Solvent B [methanol] | - | - | - | - | - |
| | Carbon black | 7.14 | 7.14 | 7.14 | 7.14 | 7.14 |
| | Nitrocellulose | 7.14 | 7.14 | - | - | - |
| | Styrene-acrylic polymer | - | - | 7.14 | - | - |
| | Methoxymethylated nylon | - | - | - | 7.14 | - |
| | Polyvinyl alcohol | - | - | - | - | 7.14 |
| | Pigmentary synergist 1 | - | - | - | - | - |
| | Pigmentary synergist 2 | - | - | - | - | - |
| | Pigmentary synergist 3 | - | - | - | - | - |
| | Acidic compound (non-volatile fraction 95%) | 7.14 (6.78) | 7.14 (6.78) | 7.14 (6.78) | 7.14 (6.78) | 7.14 (6.78) |
| Total (mass%) | | 100.00 | 100.00 | 100.00 | 100.00 | 100.00 |
| Colored resin particles fraction (mass%) | | 21.06 | 21.06 | 21.06 | 21.06 | 21.06 |
| Evaluation results | Intermittent dischargeability | C | C | C | C | D |
| | Emulsifiability | B | B | B | B | C |
| | Particle size | B | B | B | B | C |
| | Storage stability | B | B | B | B | C |
| | Rub fastness | B | B | B | B | C |

The components shown in each of the tables are described below.

(Continuous Phase)

Solvent A [Isopar M]: an isoparaffin-based solvent "Isopar M", manufactured by TonenGeneral Sekiyu K.K., initial boiling point: 224°C, end point: 254°C.

Solvent A [AF6]: a naphthene-based solvent "AF Solvent No. 6", manufactured by JX Nippon Oil & Energy Corporation, initial boiling point: 298°C, end point: 314°C.

Solvent A [AF5]: a naphthene-based solvent "AF Solvent No. 5", manufactured by JX Nippon Oil & Energy Corporation, initial boiling point: 284°C, end point: 300°C.

Basic dispersant: "Solsperse 11200", manufactured by Lubrizol Japan Ltd., non-volatile fraction: 50%, base value: 37 mgKOH/g.

(Dispersed Phase)

Solvent B [methanol]: an alcohol-based solvent having a carbon number of 1, manufactured by Wako Pure Chemical Industries, Ltd., boiling point: 64.7°C.

Carbon black: a carbon black "Mogul L", manufactured by Cabot Specialty Chemicals, Inc.

Nitrocellulose: "DLX5-8", manufactured by Nobel NC Co., Ltd.

Styrene-acrylic polymer: "ARUFON UC3920", manufactured by Toagosei Co., Ltd., Mw: 15,500.

Methoxymethylated nylon: "FR101", manufactured by Namariichi Co., Ltd., methoxymethylation rate: 30%, Mw: 20,000.

Polyvinyl alcohol: "Kuraray LM Polymer LM-20", manufactured by Kuraray Co., Ltd., degree of saponification 38.0 to 42.0.

Pigmentary synergist 1: "Solsperse 5000", manufactured by Lubrizol Japan Ltd.

Pigmentary synergist 2: "Solsperse 12000", manufactured by Lubrizol Japan Ltd.

Pigmentary synergist 3: "BYK-SYNERGIST 2100", manufactured by BYK-Chemie Japan K.K.

Acidic compound: a liquid organic compound having two phosphoric acid groups (a phosphate ester compound having phosphoric acid groups at both terminals of a copolymer), "DISPERBYK 111" manufactured by BYK-Chemie Japan K.K., acid value: 129 mgKOH/g, non-volatile fraction: 95.0%.

The above Mw values indicate the weight-average molecular weight.

The solubility of the methanol of the solvent B in each of the solvents A at 23°C was as follows.

Solvent A [Isopar M]: not more than 3 g/100g.

Solvent A [AF6]: not more than 3 g/100g.

Solvent A [AF5]: not more than 3 g/100g.

The basic dispersant Solsperse 11200 dissolved in the solvent A in the continuous phase blend proportions shown in Table 1 to Table 3, whereas the solubility of the basic dispersant in the solvent B at 23°C was less than 3 g/100g.

The pigment and the pigmentary synergists dissolved in the solvent B in the dispersed phase blend proportions shown in Table 1 to Table 3, whereas the solubility in the various solvents A at 23°C was less than 3 g/100g.

Each of the solid resins dissolved in the solvent B in the dispersed phase blend proportions shown in Table 1 to Table 3, whereas the solubility of the solid resins in the various solvents A at 23°C was less than 3 g/100g, and the solubility in water at 23°C was also less than 3 g/100g.

The acidic compound dissolved in the solvent B in the dispersed phase blend proportions shown in Table 1 to Table 3, whereas the solubility of the acidic compound in the various solvents A at 23°C was less than 3 g/100g.

<Evaluations>

Using each of the inks described above, each of the following evaluations was performed. The results are shown in each of the tables.

(Intermittent dischargeability)

Each of the above inks was loaded into an inkjet head CF1 manufactured by Toshiba TEC Corporation, and after standing for 30 minutes at 23°C, copies of a solid image (main scanning direction: 318 dots / sub-scanning direction: 3,000 dots) were printed continuously, and the images were inspected visually, with the intermittent dischargeability evaluated against the following criteria.

A: a solid image was obtained from the first printed copy.

B: the first printed solid image exhibited some non-uniformity, but a uniform solid image was obtained by the 9th printed copy.

C: the 1 st to 9th printed solid images exhibited some non-uniformity, but after printing 10 or more copies, a uniform solid image was obtained.

D: a uniform solid image was not obtained even after printing 10 or more copies.

(Emulsifiability)

In the method used for preparing the above inks, the state of the prepared oil-in-oil emulsion and the state of the inkjet ink following removal of the solvent B were inspected, and the emulsifiability was evaluated against the following criteria.

A: an emulsion was able to be obtained during preparation of the oil-in-oil emulsion, and minimal precipitation occurred following removal of the solvent B from the oil-in-oil emulsion.

B: an emulsion was able to be obtained during preparation of the oil-in-oil emulsion, but considerable precipitation occurred following removal of the solvent B from the oil-in-oil emulsion.

C: an emulsion was unable to be obtained during attempted preparation of the oil-in-oil emulsion.

(Average particle size of colored resin particles)

For each of the inks described above, the volume-based average particle size of the colored resin particles dispersed in the ink was measured using a dynamic light scattering particle size distribution analyzer "LB-500" (manufactured by Horiba, Ltd.). Based on the measurement result, the average particle size was evaluated against the following criteria.

A: average particle size of 200 nm or less.
B: average particle size exceeding 200 nm but 300 nm or less.
C: average particle size exceeding 300 nm.

(Storage stability)

First, the viscosity of the ink was measured immediately following preparation.

Next, the ink was placed in a 10 ml screw-top vial and left to stand at 70°C for one week. Subsequently, the ink was sampled, and a visual evaluation and a viscosity measurement were performed.

The viscosity was measured at room temperature (23°C) using a Rheometer ARG2 (manufactured by TA Instruments, Inc.) at a cone angle of 2° and a diameter of 40 mm.

Using the ink viscosity after standing for one week, the change in viscosity was calculated using the following formula.

$$\text{Change in viscosity (\%)} = 100 - \{\text{ink viscosity (mPa·s) after standing / ink viscosity (mPa·s) immediately after preparation}\} \times 100$$

Based on the results of the visual evaluation of the ink after standing for one week and the change in viscosity, the storage stability was evaluated against the following criteria.

A: no ink separation or pigment aggregate precipitation was observed, and the change in ink viscosity was within ±5%.
B: no ink separation or pigment aggregate precipitation was observed, and the change in ink viscosity was at least ±5% but less than ±10%.
C: either ink separation or pigment aggregate precipitation was observed, or the change in ink viscosity was at least ±10%.

(Rub fastness)

Each of the inks described above was mounted in a line-type inkjet printer "Orphis-X9050" (manufactured by Riso Kagaku Corporation), and a printed item was obtained by printing a solid image onto a high-quality coated paper "Aurora Coated Paper" (manufactured by Nippon Paper Industries Co., Ltd.). The printing was performed at a resolution of 300 × 300 dpi, under discharge conditions including an ink volume per dot of 42 pl. The "Orphis X9050" is a system that uses a line-type inkjet head, wherein the paper is transported in a sub-scanning direction perpendicular to the main scanning direction (the direction along which the nozzles are aligned) while printing is conducted.

Following standing for 24 hours after printing, the solid image portion of the printed item was rubbed strongly 5 times with a finger. The state of the printed item was then inspected visually, and the rub fastness was evaluated against the following criteria.

A: almost no separation of the image could be detected.
B: minor separation of the image was confirmed, but not problematic in actual use.
C: marked separation of the image occurred, at a level problematic for actual use.

As is evident from the tables shown above, the ink of each example exhibited favorable results for all the evaluations, and furthermore, the average particle size of the colored resin particles and the viscosity also fell within appropriate ranges.

In Examples 1 to 4, each of the various solvents A was used, and in each case, all of the evaluations were favorable.

In Examples 5 to 7, the pigmentary synergist was altered, but all of the evaluations were favorable.

In Example 6, the proportion of the comparatively high boiling point Isopar M in the solvent A was increased, but favorable results were still obtained, including for the intermittent dischargeability.

In Example 7, an acidic compound was not used. Based on the results for Examples 5 to 7, it was evident that using an acidic compound yielded improved effects.

In Example 8, when the AF5 solvent A was combined with the pigmentary synergist 3, all of the evaluations were favorable.

In Examples 9 to 12, each of the various solid resins was used, and in each case, all of the evaluations were favorable.

Based on the results for Examples 9 and 10, it was evident that satisfactory results were obtained when the blend amount of the pigmentary synergist was within a range from 0.71 to 0.28 mass%.

In Example 12, a polyvinyl alcohol having no nitrogen atoms and no aromatic rings was used as the solid resin. Based on the results for Examples 9 to 12, it was evident that using a solid resin having nitrogen atoms or aromatic rings yielded improved effects.

In each of the comparative examples, a pigmentary synergist was not used, and in each case, the intermittent dischargeability was unsatisfactory.

In Comparative Example 5, a polyvinyl alcohol having no nitrogen atoms and no aromatic rings was used as the solid resin, and all of the evaluations were unsatisfactory.

It is to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. An inkjet ink comprising colored resin particles, a basic dispersant and a non-aqueous solvent, **characterized in that** the colored resin particles comprise a pigment, a solid resin and a pigmentary synergist.

2. The inkjet ink according to Claim 1, **characterized in that** the colored resin particles also comprise a liquid organic compound having an acidic group.

3. The inkjet ink according to Claim 2, **characterized in that** the acidic group of the liquid organic compound having an acidic group includes a phosphoric acid group.

4. The inkjet ink according to any one of Claims 1 to 3, **characterized in that** the solid resin comprises one or more resins selected from among nitrogen-containing resins and aromatic ring-containing resins.

5. The inkjet ink according to Claim 4, **characterized in that** the solid resin comprises nitrocelluloses.

6. The inkjet ink according to Claim 4, **characterized in that** the solid resin comprises polyamide resins having an alkoxy group.

7. The inkjet ink according to Claim 4, **characterized in that** the solid resin comprises styrene-(meth)acrylic-based resins.

8. The inkjet ink according to any one of Claims 1 to 7, **characterized in that** the non-aqueous solvent has an initial boiling point of 250°C or higher.

9. The inkjet ink according to any one of Claims 1 to 8,, wherein an amount of the pigmentary synergist relative to a total mass of the colored resin particles is within a range from 0.25 mass% to 10 mass%.

10. The inkjet ink according to any one of Claims 1 to 9, wherein an amount of the pigmentary synergist, expressed as a mass ratio relative to a value of 1 for the pigment, is within a range from 0.005 to 0.2.

11. The inkjet ink according to any one of Claims 1 to 10, wherein an amount of the solid resin relative to a total mass of the colored resin particles is within a range from 10 mass% to 70 mass%.

12. The inkjet ink according to Claim 2 or 3, wherein an amount of the liquid organic compound having an acidic group to a total mass of the colored resin particles is within a range from 0.1 mass% to 50 mass%.

13. The inkjet ink according to Claim 2 or 3, wherein a mass ratio between the liquid organic compound having an acidic group and the pigment satisfies (mass of the liquid organic compound having an acidic group) / (mass of the pigment) $\geq 0.5$.

Europäisches Patentamt

European Patent Office

Office européen des brevets

## EUROPEAN SEARCH REPORT

Application Number

EP 16 17 7492

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 263 303 B2 (MATSUOKA HIROTAKA [JP] ET AL) 11 September 2012 (2012-09-11) * claims 1,4,15; examples 1-5; table 1 * ----- | 1-13 | INV. C09D11/00 C09D11/30 C09D11/32 C09D11/322 C09D11/326 |
| A | US 6 379 440 B1 (TATUM JOHN PHILIP [GB] ET AL) 30 April 2002 (2002-04-30) * column 4, lines 6-18; claims 1,4,5-9,13,14; examples 52,57; table 1 * ----- | 1-13 | |
| A | US 2009/185114 A1 (TAKIGUCHI HIROSHI [JP] ET AL) 23 July 2009 (2009-07-23) * paragraphs [0147] - [0158]; example 1 * ----- | 1-13 | |

TECHNICAL FIELDS SEARCHED (IPC)

C09D

The present search report has been drawn up for all claims

| Place of search | Date of completion of the search | Examiner |
|---|---|---|
| Munich | 7 November 2016 | Feldmann, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 7492

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2016

| Patent document cited in search report | | Publication date | Patent family member(s) | | Publication date |
|---|---|---|---|---|---|
| US 8263303 | B2 | 11-09-2012 | CN | 101025586 A | 29-08-2007 |
| | | | JP | 2007219229 A | 30-08-2007 |
| | | | US | 2007197734 A1 | 23-08-2007 |
| US 6379440 | B1 | 30-04-2002 | AT | 211498 T | 15-01-2002 |
| | | | BR | 9611332 A | 14-09-1999 |
| | | | CA | 2233482 A1 | 01-05-1997 |
| | | | CN | 1204358 A | 06-01-1999 |
| | | | DE | 69618658 D1 | 28-02-2002 |
| | | | DE | 69618658 T2 | 08-08-2002 |
| | | | EP | 0857196 A1 | 12-08-1998 |
| | | | ES | 2165524 T3 | 16-03-2002 |
| | | | JP | 3062553 B2 | 10-07-2000 |
| | | | JP | H11501353 A | 02-02-1999 |
| | | | RU | 2182581 C2 | 20-05-2002 |
| | | | US | 6379440 B1 | 30-04-2002 |
| | | | WO | 9715633 A1 | 01-05-1997 |
| US 2009185114 | A1 | 23-07-2009 | CN | 101486855 A | 22-07-2009 |
| | | | JP | 2009169215 A | 30-07-2009 |
| | | | US | 2009185114 A1 | 23-07-2009 |

EPO FORM P0459

For more details about this annex : see Official Journal of the European Patent Office, No. 12/82

**REFERENCES CITED IN THE DESCRIPTION**

**Patent documents cited in the description**

- JP 2007197632 A
- JP 2005255911 A
- JP 2014019770 A
- FR 101
- FR 104
- FR 105
- FR 301